# EUROPEAN PATENT APPLICATION

(11) **EP 2 782 354 A1**
(43) Date of publication of application: **24.09.2014**
(21) Application number: 13250031.5
(22) Date of filing: 19.03.2013
(51) Int. Cl.: H04N 21/488, H04N 21/472, H04N 21/431, G11B 27/00, H04N 5/783, H04N 21/432

(54) **Playback of video recording**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

A video playback device having a facility to display subtitle data 22 together with video data 21 is arranged to switch automatically to a predetermined subtitle set 222 when in fast forward mode. This allows special messages readable at fast forward speeds to be automatically delivered to a display unit 23 during fast forward mode. Subtitles readable at fast forward speeds may be provided by content providers, for example to convey a sponsor's advertisement, or as an aid to navigation of the content

## Description

This invention relates to the high-speed playback of video streams, downloads or recordings. There are many services available which allow audio or video content to be recorded / downloaded for local storage from a remote source such as a video service provider platform. This allows the user to view the content at a later time than the download or broadcast, or to view it more than once.

As well as the main programmed content, many broadcast media also provide auxiliary content which can be accessed whilst viewing the programme. In particular, subtitles may be made available for viewers who have impaired hearing, or for use when the audio output is muted, or in alternative languages for use by viewers for whom the audio output is not in a language they understand. Several different sets of subtitles may be made available.

The content may be viewed from a broadcast transmission, or it may be viewed on demand from a store of video content maintained by the service provider or an associated content provider. Such systems include "catch-up" services which allow a user to watch an episode of a series at a later time than it was broadcast without having had to set up a timer-operated recording device in advance of the broadcast time. Content may also be viewed from a physical carrier such as a DVD.

It has long been the practice to arrange video playback equipment such that a user can start or resume content playback at any point in the content. "Fast forward" and "fast reverse" controls allow the user to locate the start of section of the video content that he wishes to view. Whilst in these modes the soundtrack is usually muted, but sufficient video frames are often made visible to allow the user to locate the point he is seeking - for example for a "4-times" fast forward only 25% of the frames may be shown.

The "fast-forward" or 'rewind' facility allows the end user to speed past content of no interest to him, such as an advertisement, or to reach a point where they wish to resume watching. However, the content provider may have a legal or commercial requirement that the end user should not skip certain parts of the content, for example advertising, statutory notices, warnings of the nature of the content, etc. Also, in addition to the fast-moving images, it can be desirable to provide a guide as to what part of the programme has been reached in fast forward mode. For example in a music video it may not be readily apparent from the visual content alone which musical number is associated with it..

Most free-to-user content is paid for by revenue from advertisements forming part of the content stream. Although the content is usually still visible in fast forward mode, without the sound track it may lose much of its meaning. Moreover, much effort goes into making advertising material tell a story, often with the branding, appearing relatively briefly only at the end. When accelerated by a fast forward function, the brand, product name or essential message may appear for too short a time to actually register with the viewer. Sponsors are less willing to place advertisements in video content from which it can be effectively skipped past, so content providers are finding sponsorship increasingly difficult to find, which ultimately reduces the quality and quantity of programme content that can be produced and made available to the viewing public.

Many playback devices are consumer products, bought by and the property of the end user, but some service providers supply special receiving devices, or special programming for existing devices, and therefore retain control over access to the content, and in particular over, the functions that the device can perform.

Some systems are able to determine the type of content being played back and for example disable or restrict the fast-forward or rewind or skip controls for certain content. However, this is not always possible or practical. It may also be disconcerting for the viewer. The present invention provides a system which enables certain content to be handled in a special way when a fast forward function is in use.

If desired, the same principles could be applied to the "fast reverse" function, and for that reason the operation will be described herein as an "accelerated play" function. Operation at other than normal speed is also sometimes known as a "trick play" feature.

According to the invention, there is provided a method of processing a stream of video data received by a client platform, for output to a display unit, in which subtitle content is received together with the video data, wherein on receipt of an instruction to display the video data at an accelerated rate the subtitle content is sent for output to the display unit.

Another aspect provides a video client platform having a receiver for receiving video data, a store for the received video data, and a processor for processing the received video data for output to a display unit, the video client platform having an auxiliary store for auxiliary subtitle content received together with the video data, wherein the processor is arranged to respond to an instruction to output the video data to the display unit at an accelerated rate by sending the auxiliary subtitle data retrieved from the auxiliary store to the display unit.

The subtitle content displayed during accelerated play may replace different subtitle content delivered during display at normal rate. A plurality of auxiliary subtitle streams may be transmitted, so that the auxiliary subtitle content displayed can be selected according to which of a plurality of rates is identified in the instruction received to play at an accelerated rate.

The invention allows additional content to appear during an accelerated play function. This is achieved by automatically switching on a subtitle display function if the playback equipment is operating at accelerated play mode. The additional content is provided as a subtitle input, either additional to the subtitle inputs provided conventionally, or replacing them for the duration of the main content for which additional content is required.

The invention may have many applications, but will be described herein as being for advertising. For example, a 32-second commercial may have just the last two seconds taken up by the final "message" scene depicting the product being advertised, or a slogan. When speeded up eight times, this scene would last only ¼ sec, which would give it much less impact. By providing a subtitle to convey the essential message throughout the complete commercial slot (for example four seconds when played at eight times normal speed), the essential message can still be made. The provision of alternative content also allows the absence of a soundtrack to be allowed for, as most playback devices are muted when in accelerated play mode.

This invention can also be used to help a viewer to identify his whereabouts in the programme by displaying the 'chapter name' of a long programme (e.g. a film), or the title of a song in a music video.

The accelerated content remains visible, reassuring the user that the fast forward function is still operating.

The playback device is arranged to switch the subtitle facility on and off with the fast forward function. If the viewer is already using one of the normal subtitle sets, the playback device will switch to the special subtitle set whilst the fast forward function is in operation. It is of course for the content providers to decide what content, if any, to provide in each subtitle set.

Exemplary embodiments of the invention will now be described with reference to the drawings, in which:
Figure 1 illustrates a video playback device operating according to the invention;
Figure 2 illustrates a subtitle sequence generated according to a first embodiment of the invention.
Figure 3 illustrates a subtitle sequence generated according to a second embodiment of the invention.

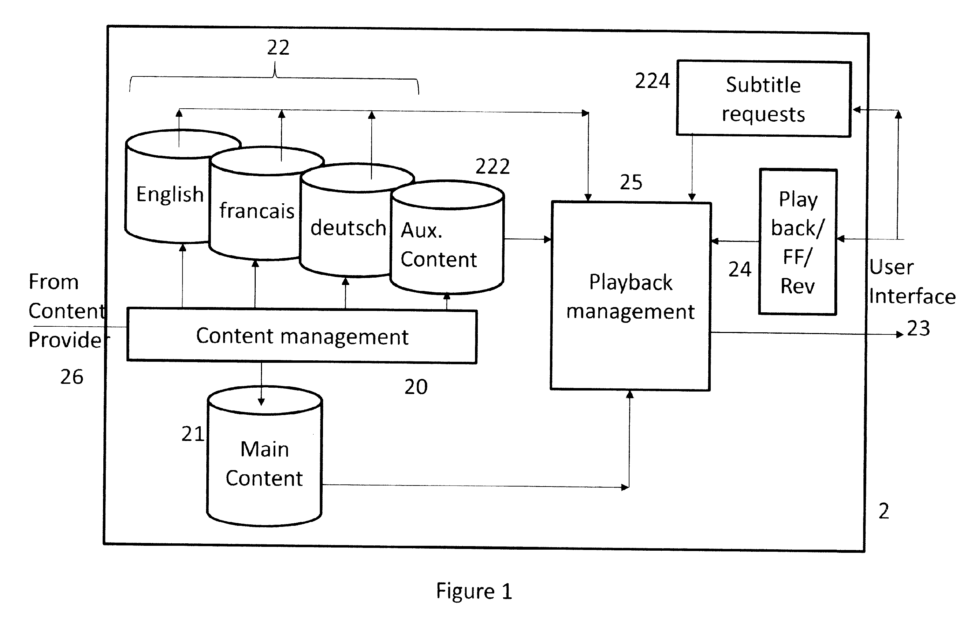

It will be understood that Figure 1 depicts the functional elements required to operate the invention. These elements may be embodied in software running on a computer, or on a dedicated playback device.

Figure 1 illustrates a video playback device 2 for use in the invention. It has an interface 26 providing a connection to a content provider platform, typically over a data communications system such as a broadcast TV network or the Internet, and a further interface 23 with a user device such as television set, or an integral screen, for display of the content

The playback device 2 includes a management system 20 for transmitting requests, over a communications network such as the Internet, to a content delivery platform, and directing data, received from the content delivery platform in response to such requests, in a content store 21 for later playback. A playback management system 25 retrieves the data from the content store 21 for delivery to the user display interface 23. An input unit 24 allows a user to control the device 2. The user device used for such input may be integral with the device 2 and/or the output 23, for example a computer keyboard, or it may be a separate unit such as a remote control unit. Typical user input functions include the control of the content management system 20 to select content for download to the store 21 for subsequent playback, or to set a timer to download broadcast material at some future time, and editing the contents of the store 21, for example to delete content after it has been viewed.

The input functions also include playback control functions, such "play", "pause", "fast forward", "reverse" etc, which control the playback management system 25 to access different parts of the content 21.

The content management system 20 also stores subtitle data 22 received from the content provider. The subtitle data 22 typically provides various supplementary data, to be displayed in the form of subtitles data in response to commands received by a subtitle request management subsystem 224 under the control of the user over the interface 23..

As is well-known, most fast forward and reverse functions cause the playback system to step through the content at a rate faster than normal playback, whilst displaying selected frames of the content. This assists the user to identify the part of the content that he is seeking. However, at such "accelerated play" speeds (forward or reverse), the content may be difficult or impossible to understand, particularly as the soundtrack is generally muted. It can be difficult to navigate certain types of programme, such as music videos, or those with a large proportion of "talking heads" using the visual content alone. Content providers may also require certain content e.g, advertisements to be clearer when being fast-forwarded.

According to the invention, the client device 2 includes an auxiliary store 222 for storing auxiliary subtitle content included or downloaded with the main content 21 and associated with it. This auxiliary store 222 is essentially a further store of subtitle data similar to those labelled 22 in Figure 1.

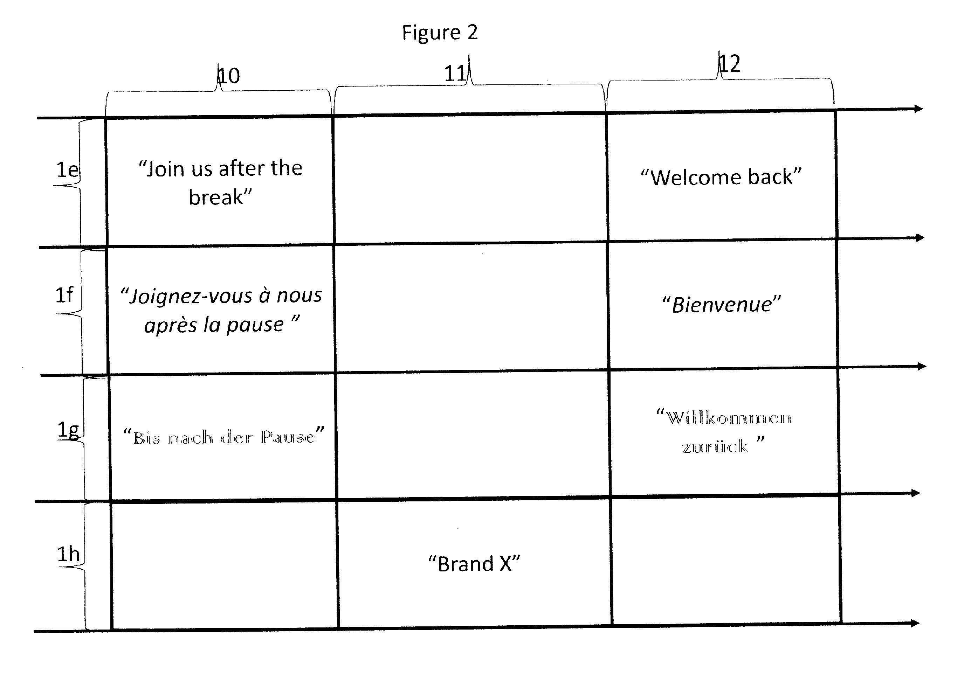

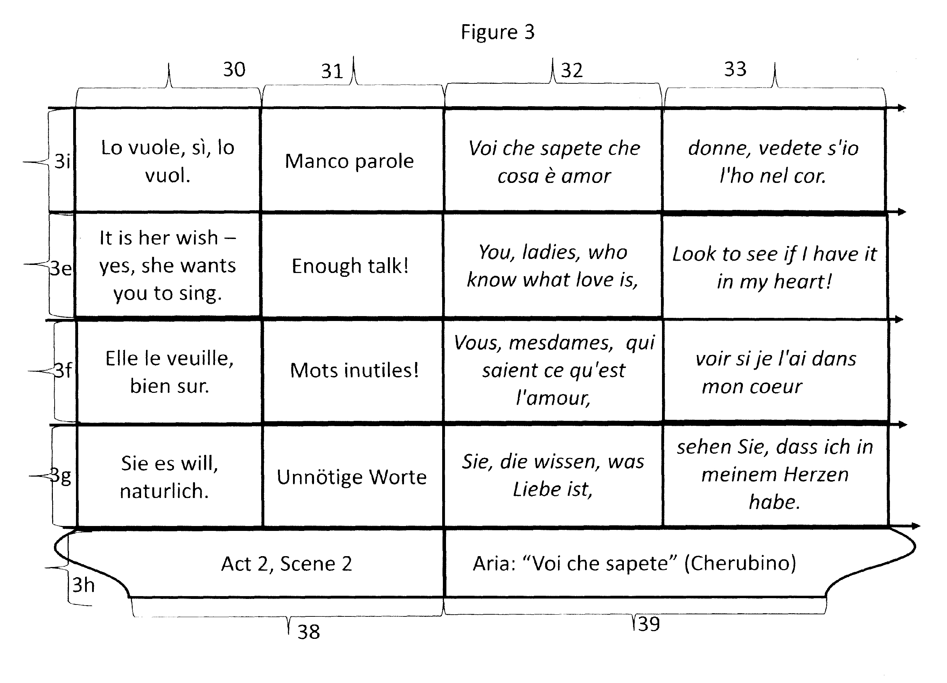

The playback management system 25 is arranged to access the auxiliary subtitle content 222 when the "accelerated play" function 24 is active, and transmits the auxiliary subtitles to the user interface 23. As will be described with reference to Figures 2 and 3, during the fast forward mode the auxiliary content may replace any subtitle content requested by the subtitle request management subsystem 224.

In the embodiments to be described, there are a number of stores of subtitle data, which can each be selected on demand, but one of which is also automatically selected when the playback device is operating in "accelerated play" mode. This special store may be an otherwise "spare" subtitle channel, as shown in Figure 2, or it may be used for other purposes for parts of the main content other than those with "essential" messages.

Figures 2 and 3 show two different ways that auxiliary subtitle content may be delivered to the user.

In Figure 2, four subtitle sequences 1e, 1f, 1g, 1h are depicted. The first three sequences 1e, 1f, 1g each carry text relating to the content of the television programme with which they are transmitted, typically duplicating speech carried on the soundtrack for the benefit of viewers who have hearing difficulties or require the speech to be translated into a language other than that on the soundtrack. Typically, several different subtitle sequences are provided in broadcast or recorded material, each individually selectable by the user.

In the present invention, one of these subtitle sequences 1h is allocated to content to be displayed during an "accelerated play" mode. In Figure 2, this sequence only carries content during selected periods of the viewable content, for example during an advertisement break 11, whilst the other subtitle sequences 1e, 1f, 1g only carry content at other times 10, 12. However, it is not necessary for the advertising material to be confined to the duration (at fast forward speed) of the corresponding advertisement break, and its duration may extend before or after the advertising slot as long as required to deliver the message.

It is possible for the subtitle channel allocated for accelerated play mode in to be used for normal subtitle content at times 10,12 when it is not required for the special messages.

The content 1h appearing during the advertisement break 11 is selected so as to appear comprehensible at the accelerated speeds used during "fast forward" and "fast reverse" operation. Only one such auxiliary content sequence 1h is depicted in Figure 2, but if sufficient sequences are available for this purpose, different sequences may be used for forward and reverse, or for different speeds.

In Figure 2, the subtitle channel 1h is shown as unused when not required to display "essential" content in advertisement breaks 11. However, the content store 222 is essentially the same as the other subtitle stores, and may provide other content, such as another language, during periods 10, 12 when it is not required for the "essential" content.

In operation, as shown in Figure 1, during normal play the playback management system 25 responds to inputs from the "subtitle requests" function 224 by selecting the appropriate content 1e, 1f, 1g from the subtitle data 22 and forwarding it, together with the main content 21, to the user interface 23 for display on a television or other output device.

When an input is received by the "accelerated play" controller 24 the playback management system 25 responds by outputting the content at the required accelerated and/or reversed rate. It also retrieves the content 1h from the auxiliary content store 222 and forwards it, together with the main content 21, to the user interface 23 for display on a television or other output device. In this way the message conveyed by the auxiliary content can be automatically made available to the user. Any other subtitle sequence (e.g 1f) currently selected by the user through the subtitle request function 224 is suspended whilst the accelerated play mode is in operation.

As depicted in Figure 2, the auxiliary subchannel 1h only displays auxiliary content 222 during advertisement breaks 11. However, content providers may provide such content in the form of subtitles for display with any part of the video content. For example, the content may be provided for some period before or after the break, or even throughout the duration of the main content, in order to allow sufficient time for the auxiliary content to be read.

An alternative use for the invention is depicted in Figure 3. In this case selectable subchannels 3i, 3e, 3f, 3g are provided in the content store 22 for the language of the soundtrack and three other languages, selectable by the user by the request function 224. During operation of the "accelerated play" function 24, the playback management system suspends display of the subtitle sequence 3i, 3e, 3f, 3g that has been selected (if any) and automatically displays a subtitle sequence 3h, retrieved from the auxiliary content store 222, which indicates the relevant part of the content that has been reached. This can be particularly useful when the point that has been reached is not readily apparent from the visual content alone - in this example, when a musical item begins in a staged production. The content 38, 39 will remain constant for significant sections of the viewable content, so that it can be read at the higher playback speeds used in accelerated play mode. For example, each element 30, 31, 32, 33 of the subtitle content 22 would typically be displayed for a few seconds of normal play, and be unreadable during accelerated play, whereas each item 38, 39 of auxiliary subtitle content 3h would typically be displayed throughout a scene of a drama, or a musical number, which at normal speeds would take several minutes but at "accelerated play" speeds would take a few seconds. For example; a four-minute musical item would, at 32x fast forward speed, pass in 7.5 seconds.

## Claims

1. A method of processing a stream of video data received by a client platform for output to a display unit, in which subtitle content is received together with the video data, wherein on receipt of an instruction to display the video data at an accelerated rate the subtitle content is sent for output to the display unit.

2. A method according to claim 1, in which the subtitle content displayed during accelerated play replaces different subtitle content delivered during display at normal rate.

3. A method according to claim 1 or claim 2, in which a plurality of auxiliary subtitle streams are downloaded to the client platform, and the auxiliary subtitle content displayed is selected according to which of a plurality of rates is identified in the instruction received to play at an accelerated rate.

4. A video client platform having a receiver for receiving video data, a store for the received video data, and a processor for processing the received video data for output to a display unit, the video client platform having an auxiliary store for auxiliary subtitle content received together with the video data, wherein the processor is arranged to respond to an instruction to output the video data to the display unit at an accelerated rate by sending the auxiliary subtitle data retrieved from the auxiliary store to the display unit.

5. A video client platform according to claim 4, wherein the processor is arranged such that the subtitle content displayed during accelerated play replaces different subtitle content delivered during display at normal rate.

6. A video client platform according to claim 4 or claim 5, wherein the auxiliary store is arranged to download a plurality of auxiliary subtitle streams, and wherein the processor is arranged to respond to an instruction to output the video data to the display unit at each of a plurality of accelerated rates by downloading a respective one of the auxiliary subtitle streams.
